Europäisches Patentamt

(19) European Patent Office

Office européen des brevets

(11) Veröffentlichungsnummer : **0 024 705**
**B1**

(12) **EUROPÄISCHE PATENTSCHRIFT**

(45) Veröffentlichungstag der Patentschrift :
23.05.84

(21) Anmeldenummer : 80105003.0

(22) Anmeldetag : 22.08.80

(51) Int. Cl.³ : **G 01 N 33/48**

(54) **Blutsenkungsvorrichtung.**

(30) Priorität : 01.09.79 DE 2935371

(43) Veröffentlichungstag der Anmeldung :
**11.03.81 Patentblatt 81/10**

(45) Bekanntmachung des Hinweises auf die Patenterteilung : **23.05.84 Patentblatt 84/21**

(84) Benannte Vertragsstaaten :
**AT BE CH FR GB IT LI LU NL SE**

(56) Entgegenhaltungen :
**DE-A- 2 137 622
DE-A- 2 155 566
DE-A- 2 736 390
DE-B- 1 598 755
FR-A-   956 274
FR-A- 2 230 995
FR-A- 2 276 590
NL-A- 7 601 839**

(73) Patentinhaber : **Walter Sarstedt Kunststoff-Spritzgusswerk
D-5223 Nümbrecht/Rommelsdorf (DE)**

(72) Erfinder : **Färber, Horst
Im alten Feld 12 Bierenbachtal
D-5223 Nümbrecht (DE)**
Erfinder : **Fritze, Heinz, Dr.
Am Waldhang 9
D-5270 Gummersbach 21 (DE)**
Erfinder : **Selbel, Eberhard
Neuer Weg 21
D-5220 Waldbröl-Bröl (DE)**

(74) Vertreter : **Patentanwälte Dipl.-Ing. W. Dahlke
Dipl.-Ing. H.-J. Lippert
Frankenforster Strasse 137
D-5060 Bergisch Gladbach 3 (DE)**

Jouve, 18, rue St-Denis, 75001 Paris, France

## Beschreibung

Die Erfindung betrifft eine Blutsenkungsvorrichtung, die ein durchsichtiges, dicht unterhalb ihres oberen Endes mit einer Eichmarke versehenes Senkungsröhrchen umfaßt. Ein solches Senkungsröhrchen wird bis zur oberen Eichmarke mit Blut gefüllt und dann in vertikaler Lage aufgestellt. In dem in bekannter Weise vorher ungerinnbar gemachten Blut senken sich jetzt die roten Blutkörperchen allmählich ab, so daß im oberen Raum das Blutserum verbleibt. Die Grenze zwischen dem unteren, die Blutkörperchen enthaltenden Teil und dem darüber befindlichen Blutserum wird nach einer gewissen Zeit oder in gewissen Zeitabständen beobachtet und die sich daraus ergebende Senkungsgeschwindigkeit für diagnostische Zwecke benutzt.

Um vergleichbare Messungen durchführen zu können, muß bei allen Proben die gleiche Standhöhe in den Senkungsröhrchen vorhanden sein. Das wird durch Füllen bis zu der Eichmarke am oberen Ende des Röhrchens erreicht. Dabei muß das untere Ende der Flüssigkeitssäule definiert begrenzt werden. Dies geschieht bei einer bekannten Blutsenkungsvorrichtung durch ein Verschlußstück mit Ventil am unteren Ende des Senkungsröhrchens, das nach dem seitlichen Einbringen des Blutes mittels einer Spritze oder dergleichen verschlossen wird.

Diese bekannte Blutsenkungsvorrichtung ist wegen des Ventils kostspielig und wird deshalb mehrfach verwendet, wobei aber die Reinigungsarbeiten zeitraubend sind.

Es ist ferner eine Blutsenkungsvorrichtung bekanntgeworden, die eine Füllkappe aus Kunststoff aufweist, in die das mit Eichmarke versehene Senkungsröhrchen luftdicht eingeschoben wird. Das Röhrchen wird in diese Füllkappe bis zum unteren Ende eingeschoben, so daß das untere Ende der Blutsäule damit definiert begrenzt ist. Gleichzeitig wird das in der Füllkappe befindliche Blut durch das eingeschobene Senkungsröhrchen verdrängt und weicht über die Bohrung des Röhrchens nach oben aus.

In der Füllkappe befindet sich ebenfalls eine Eichmarke und es ist erforderlich, daß die Füllkappe exakt bis zu dieser Eichmarke gefüllt wird. Das dann eingefüllte Blutvolumen ist so bemessen, daß es beim Einschieben des zugehörigen Senkungsröhrchens bis zur Eichmarke an deren oberem Ende steigt. Dies erfordert ein sehr genaues Einfüllen des Blutes in die Füllkappe. Außerdem müssen exakt kalibrierte Senkungsröhrchen verwendet werden, die nicht nur hinsichtlich ihrer lichten Weite, also ihres Füllvolumens, sondern auch hinsichtlich ihrer Wandstärke wegen der Verdrängungswirkung völlig gleichmäßig sein müssen.

Dennoch schließt der Hersteller dieser Blutsenkungsvorrichtung nicht aus, daß das Blut beim Einschieben des Senkungsröhrchens über die Eichmarke hinweg steigt. Um das zu korrigieren, ist bei der bekannten Vorrichtung eine Lüftung durch seitliches Wegbiegen des Senkungsröhrchens innerhalb der etwas elastischen Füllkappe möglich. Falls dabei aber der Blutspiegel wieder unter die Eichmarke sinkt, kann nicht mehr korrigiert werden und der ganze Vorgang muß durch Herausziehen des Senkungsröhrchens, erneutes Anfüllen mit Blut und dann Einschieben des Senkungsröhrchens wiederholt werden. Diese bekannte Vorrichtung ist zwar preiswerter als die eingangs erwähnte Blutsenkungsvorrichtungen mit Ventil, dafür aber umständlich in der Handhabung.

Es ist ferner durch die DE-27 36 390 eine Blutsenkungsvorrichtung bekanntgeworden, die ein mit einer Skala versehenes Messrohr und ein Blutaufnahmegefäß umfaßt und bei der das Messrohr an seinem unteren Ende mit einem Stopfen versehen ist, dessen Außendurchmesser **dem Innendurchmesser des Blutaufnahmegefäßes entspricht. Bei dieser bekannten Vorrichtung** kann man zwar das Flüssigkeitsniveau am oberen Ende des Messrohres auf die Nullmarke stellen ; es ist aber nicht möglich, gleichzeitig das untere Ende des Messrohres auf dem Boden des Gefäßes aufstehen zu lassen, so daß keine Flüssigkeitssäule definierter Höhe vorliegt und die Meßergebnisse entsprechend schwanken müssen.

Auch bei der Vorrichtung nach der FR-A-2 230 995 ist ein Messrohr mit einem Stopfen an seinem unteren Ende vorgesehen, der sich in einem Blutaufnahmegefäßt befindet. Auch hier ist, wie bei der vorgenannten Druckschrift, die Einstellung des Flüssigkeitsniveaus auf die Nullmarke nur durch Abheben des unteren Endes des Messrohres vom Boden des Gefäßes möglich.

Das gleiche gilt für die Vorrichtung nach der DE-B-1 598 755, bei der ebenfalls zur Einstellung des Flüssigkeitsniveaus das Messrohr aus dem Messgefäß herausgezogen werden muß.

Schließlich zeigt auch die NL-A-7 901 839 eine Blutsenkungsvorrichtung des vorgenannten Typs. Die Hülse 2 sitzt dort fest auf dem unteren Ende des Messrohres 1 und wird mit diesem gemeinsam in das Gefäß 4 eingeschoben.

Bei allen vorgenannten bekannten Vorrichtungen ist also nur eine einzige Verschiebungsbewegung möglich, nämlich die Verschiebung des Messrohres zusammen mit einer abdichtenden Hülse bzw. einem Kolben innerhalb des Aufnahmegefäßes, nicht jedoch eine Verschiebung der zwischen Messrohr und Aufnahmegefäß befindlichen abdichtenden Hülse gegenüber dem Messrohr selbst.

Der Erfindung liegt die Aufgabe zugrunde, eine Blutsenkungsvorrichtung der eingangs genannten Art zu schaffen, die einfach und billig in der Herstellung und zusätzlich einfach in der Bedienung ist und keine besonderen Anforderungen an die Gleichmäßigkeit der Wandstärke der Blutsenkungsröhrchen stellt.

Diese Aufgabe wird erfindungsgemäß dadurch gelöst, daß das Blutsenkungsröhrchen in seinem unteren Teil luftdicht und verschiebbar von einer Verdrängerhülse aus weichelastischem Werkstoff umgeben ist, die wiederum luftdicht und verschiebbar von einem rohrförmigen, unten geschlossenen Gefäß umgeben wird, das die Blutprobe aufnimmt.

Das Gefäß wird mit Blut gefüllt, wobei es auf eine genaue Dosierung nicht ankommt. Dann wird das Senkungsröhrchen mit seinem unteren Ende in dieses Gefäß eingeschoben, wobei sich die Verdrängerhülse bereits oberhalb des unteren Endes des Senkungsröhrchens auf diesem befinden kann. Zweckmäßig ist der Abstand zwischen Unterkante des Senkungsröhrchens und der Unterkante der Verdrängerhülse etwa gleich der Höhe des Gefäßes oder etwas geringer. Wenn jetzt das Senkungsröhrchen in das mit Blut gefüllte Gefäß eingebracht wird, befindet sich die Verdrängerhülse mit ihrer Unterkante etwa an der Oberkante des Gefäßes oder taucht bereits geringfügig in das Gefäß ein. Sobald dann das Senkungsröhrchen auf dem Boden des Gefäßes aufsteht, wird die Verdrängerhülse weiter in das Gefäß eingeschoben. Dabei verdrängt sie einen Teil des im Gefäß befindlichen Blutes, das nun über den infolge Unregelmäßigkeiten der Unterkante des Senkungsröhrchens stets vorhandenem Spalt zwischen diesem und dem Gefäß durchdrängt und im Inneren des Senkungsröhrchens aufsteigt. Die Verdrängerhülse wird so lange abwärts bewegt, bis das Blut im Senkungsröhrchen die Eichmarke am oberen Ende erreicht hat. Sollte man dabei die Verdrängerhülse etwas zu weit abwärts bewegt haben, so daß das Blut über die Eichmarke hinaussteigt, kann man diesen Fehler mühelos dadurch korrigieren, daß man die Verdrängerhülse wieder vorsichtig aufwärts bewegt, wobei allerdings das Senkungsröhrchen festgehalten werden muß, damit es nach wie vor auf dem Boden des Gefäßes aufsteht.

Zweckmäßig wird das Gefäß aus einem durchsichtigen Werkstoff, beispielsweise Glas oder Kunststoff, hergestellt und kann zusätzlich mit einer Eichmarke versehen werden, damit man nur so viel Blut einfüllt, wie es zum sicheren Einstellen erforderlich ist.

Die Verdrängerhülse, die aus einem weichelastischem Werkstoff hergestellt ist, dichtet dann schon aufgrund seiner Elastizität innen und außen ab. Vorzugsweise sind aber auf der Innenwand und/oder der Außenwand der Verdrängerhülse Dichtungslippen angeformt.

Um dem Senkungsröhrchen in dem weiteren Gefäß an dessen Boden eine seitliche Führung zu geben, was die anschließende Handhabung der Vorrichtung erleichtert, ist dort auf der Innenseite des Gefäßes eine trichterförmige Verengung vorgesehen. Diese Verengung kann auch dadurch geschaffen werden, daß ein ringförmiger Einsatz mit trichterförmiger Erweiterung in das Gefäß eingesetzt wird.

In Weiterbildung der Erfindung ist vorgesehen, am oberen Ende des Gefäßes ein Außengewinde anzubringen und die Verdrängerhülse mit einem Flansch und einer einstückig mit diesem verbundenen Stellhülse zu versehen, die die Verdrängerhülse mit Abstand umgibt und mit Innengewinde versehen ist, das zum Außengewinde auf dem oberen Ende des Gefäßes paßt. Die Zuordnung ist dann so getroffen, daß nach dem Aufsetzen des Senkungsröhrchens auf dem Boden des Gefäßes zunächst die Verdrängerhülse durch Ergreifen ihres Flansches bzw. der umgebenden Stellhülse abwärts geschoben wird, und zwar so weit, daß dadurch das Blut im Senkungsröhrchen bis dicht unterhalb der Eichmarke gestiegen ist. In dieser, vorher ermittelten Lage der Teile zueinander greift dann das Gewinde der Stellhülse in das Außengewinde des Gefäßes ein. Eine weitere Abwärtsbewegung der Verdrängerhülse ist dann durch Drehen der Stellhülse möglich. Durch diese Drehung wird eine äußerst feinfühlige Einstellung des Blutspiegels im Senkungsröhrchen auf die Höhe der Eichmarke ermöglicht.

Die Erfindung wird nachstehend in Ausführungsbeispielen anhand der Zeichnung näher erläutert : Dabei zeigen :

Figur 1 einen Schnitt durch eine erfindungsgemäße Blutsenkungsvorrichtung im Betrieb und

Figur 2 einen Schnitt durch eine abgewandelte Ausführungsform.

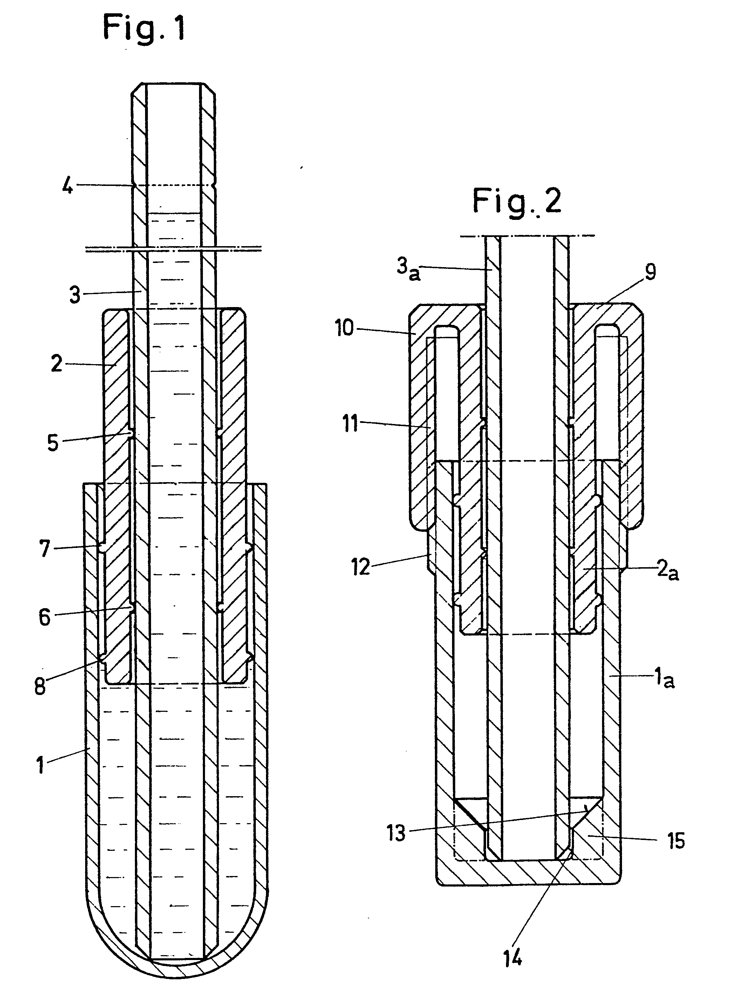

Die in Fig. 1 dargestellte Vorrichtung besteht aus einem unten geschlossenen rohrförmigen Gefäß 1 aus transparentem Kunststoff, einem an beiden Enden offenen Senkungsröhrchen 3 aus Glas mit einer Eichmarke 4 unterhalb des oberen Endes und einer zwischen Gefäß 1 und Senkungsröhrchen 3 befindlichen Verdrängerhülse 2 aus weichelastischem Kunststoff.

Die Verdrängerhülse ist auf ihrer Innenseite mit zwei Dichtungslippen 5 und 6 versehen. In gleicher Weise befinden sich auf dem Außenmantel der Verdrängerhülse 2 zwei Dichtungslippen 7 und 8. Die Verdrängerhülse 2 ist leicht gegenüber dem Senkungsröhrchen 3 und dem Gefäß 1 verschiebbar ; sie stellt aber wegen der vorgenannten Dichtungslippen einen dicht eingepaßten Verdrängerkolben dar, der durch Abwärtsbewegen in den Ringspalt zwischen dem Senkungsröhrchen 3 und Gefäß 1 eindringt und das darin befindliche Blut verdrängt, so daß es über die Unterkante des Senkungsröhrchens 3 in dieses eindringt und entsprechend darin ansteigt. Die Einstellung des Blutspiegels in Höhe der Eichmarke 4 ist in einfacher Weise möglich. Falls der Blutspiegel versehentlich zu hoch gekommen ist, kann man diese Fehleinstellung mühelos durch geringfügiges Abwärtsbewegen der Verdrängerhülse 2 — bei festgehalenem Senkungsröhrchen 3 — korrigieren.

Bei der in Fig. 2 dargestellten Ausführungsform ist das Gefäß 1a an seinem unteren Ende innen trichterförmig bei 13 verengt und stellt bei 14 eine Führung für das eingebrachte Senkungsröhrchen 3a dar. Anstelle der in Fig. 2 dargestellten Verdickung 15 kann auch bei einem Gefäß gemäß Fig. 1 ein entsprechender Einsatzring verwendet werden.

Bei dieser Ausführung erstreckt sich vom oberen Ende der Verdrängerhülse 2a ein Flansch 9 radial nach außen, der wiederum eine Stellhülse 10 so trägt, daß diese die Verdrängerhülse 2a im Abstand konzentrisch umgibt. Der Innendurchmesser der Stellhülse 10 und der Außendurchmesser des Gefäßes 1a sind aufeinander abgestimmt und die Stellhülse ist mit einem Innengewinde versehen, das in ein Außengewinde 12 am oberen Rand des Gefäßes 1a eingreifen kann. Die Zuordnung und Bemessung der Teile ist dabei so vorgenommen, daß vom Eintauchen der Verdrängerhülse bis zum Eingriff des Gewindes gerade so viel Blut verdrängt wurde, daß die Eichmarke am oberen Teil des Senkungsröhrchens fast erreicht ist. Anschließend wird dann durch Drehen der Stellhülse 10 der Blutspiegel genau auf die Eichmarke gebracht.

**Ansprüche**

1. Blutsenkungsvorrichtung, die ein durchsichtiges, dicht unterhalb ihres oberen Endes mit einer Eichmarke versehenes Senkungsröhrchen umfaßt, wobei die eingefüllte Blutsäule an ihrem unteren Ende definiert begrenzt ist, gekennzeichnet durch eine luftdicht und verschiebbar den unteren Teil des Senkungsröhrchens (3) umgebende Verdrängerhülse (2) aus weichelastischem Werkstoff und ein diese luftdicht und verschiebbar umgebendes, die Blutprobe aufnehmendes, rohrförmiges, unten geschlossenes Gefäß (1).

2. Vorrichtung nach Anspruch 1, dadurch gekennzeichnet, daß die Abdichtung des Senkungsröhrchens (3) gegenüber der Verdrängerhülse (2) durch Dichtungslippen (5, 6) an deren Innenwand erfolgt.

3. Vorrichtung nach den Ansprüchen 1 und 2, dadurch gekennzeichnet, daß die Abdichtung der Verdrängerhülse (2) gegenüber dem Gefäß (1) durch Dichtungslippen (7, 8) an der Außenwand der Verdrängerhülse (2) erfolgt.

4. Vorrichtung nach dem Ansprüchen 1 bis 3, gekennzeichnet durch eine trichterförmige Verengung (13, 14) des Innenraumes des Gefäßes (1a) an dessen unterem Ende zur Führung und Halterung des unteren Endes des Senkungsröhrchens (3a).

5. Vorrichtung nach den Ansprüchen 1 bis 4, gekennzeichnet durch ein Außengewinde (12) am oberen Ende des Gefäßes (1a) und eine mit dem entsprechenden Innengewinde (11) versehenen Stellhülse (10), die über einen Flansch (9) einstückig mit der Verdrängerhülse (2a) verbunden ist und diese mit Abstand umgibt.

**Claims**

1. Blood sedimentation apparatus comprising a transparent sedimentation tube provided with a calibration mark just below its upper end, the column of blood filled into the tube being restricted in a defined manner at its bottom end, characterised by a displacement cylinder (2) of softly-elastic material enclosing the lower part of the sedimentation tube (3) in displaceable and airtight fashion, and further characterised by, surrounding the said displacement sleeve (2) in airtight and displaceable fashion and accommodating the blood sample, a tubular vessel (1) which is closed at the bottom.

2. An apparatus according to Claim 1, characterised in that the sedimentation tube (3) is sealed in respect of the displacement sleeve (2) by sealing lips (5, 6) applied against the inner wall thereof.

3. An apparatus according to Claims 1 and 2, characterised in that the displacement sleeve (2) is sealed in respect of the vessel (1) by sealing lips (7, 8) on the outer wall of the displacement sleeve (2).

4. An apparatus according to Claims 1 to 3, characterised by a funnelshaped narrowing (13, 14) of the interior of the vessel (1a) at the bottom end thereof for guiding and supporting the bottom end of the sedimentation tube (3a).

5. An apparatus according to Claims 1 to 4, characterised by an external screwthread (12) at the upper end of the vessel (1a) and, provided with the corresponding internal screwthread (11), a positioning sleeve (10) which, with a spacing in between, surrounds the displacement sleeve (2a) to which it is integrally connected.

**Revendications**

1. Dispositif de sédimentation sanguine comprenant un petit tube de sédimentation transparent qui est muni d'un repère de jaugeage immédiatement au-dessous de son extrémité supérieure, la colonne de sang introduite étant délimitée de manière définie à son extrémité inférieure, caractérisé par un manchon de déplacement (2) en matière souple, entourant de manière étanche à l'air et de manière mobile la partie inférieure du petit tube de sédimentation (3), et par un récipient tubulaire (1), fermé vers le bas, destiné à recevoir l'échantillon de sang et entourant ce manchon de déplacement (2) de manière étanche à l'air et de manière mobile.

2. Dispositif selon la revendication 1, caractérisé en ce que l'étanchéité entre le petit tube de sédimentation (3) et le manchon de déplacement (2) est assurée par des lèvres d'étanchéité (5, 6) formées sur la paroi interne de ce manchon.

3. Dispositif selon la revendication 1 ou 2, caractérisé en ce que l'étanchéité entre le manchon de déplacement (2) et le récipient (1) est assurée par des lèvres d'étanchéité (7, 8) formées sur la paroi externe du manchon de déplacement (2).

4. Dispositif selon l'une quelconque des revendications 1 à 3, caractérisé par un resserrement en entonnoir (13, 14) du volume intérieur du récipient (1a) à l'extrémité inférieure de celui-ci, pour le guidage et le maintien de l'extrémité inférieure du petit tube de sédimentation (3a).

5. Dispositif selon l'une quelconque des revendications 1 à 4, caractérisé par un filetage extérieur (12) à l'extrémité supérieure du récipient (1a) et par une douille de réglage (10) qui est munie du filetage intérieur correspondant (11), est raccordée d'une seule pièce au manchon de déplacement (2a) par une bride (9) et entoure à distance ce manchon.

# Fig. 1

# Fig. 2